(19) Europäisches Patentamt
European Patent Office
Office européen des brevets

(11) **EP 3 460 642 A1**

(12) **EUROPEAN PATENT APPLICATION**
published in accordance with Art. 153(4) EPC

(43) Date of publication:
**27.03.2019 Bulletin 2019/13**

(21) Application number: **17798528.0**

(22) Date of filing: **08.03.2017**

(51) Int Cl.:
***G06F 3/043*** (2006.01)

(86) International application number:
**PCT/CN2017/075962**

(87) International publication number:
**WO 2017/197962 (23.11.2017 Gazette 2017/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.05.2016 CN 201610330637**

(71) Applicant: **General Touch Co., Ltd**
**Chengdu, Sichuan 610041 (CN)**

(72) Inventors:
• **LIN, Li**
 **Chengdu**
 **Sichuan 610041 (CN)**

• **YIN, Huacheng**
 **Chengdu**
 **Sichuan 610041 (CN)**
• **PU, Cailin**
 **Chengdu**
 **Sichuan 610041 (CN)**
• **HE, Zhixing**
 **Chengdu**
 **Sichuan 610041 (CN)**

(74) Representative: **Chas. Hude A/S**
**H.C. Andersens Boulevard 33**
**1780 Copenhagen V (DK)**

(54) **WRITING SYSTEM AND WRITING METHOD BASED ON ULTRASONIC PEN**

(57) The embodiments of the present disclosure provide an ultrasonic pen based writing system and method. The writing system includes: an ultrasonic pen, a writing board, an MCU main control unit and a reference signal transmitting unit; wherein the ultrasonic pen comprises an ultrasonic transmitter and a pen lead; an upper end portion of the pen lead forms a signal receiving portion fixed with the ultrasonic transmitter; at least two ultrasonic receivers are arranged correspondingly on the writing board, each ultrasonic receiver is communicatively connected to the MCU main control unit; the reference signal transmitting unit is communicatively connected to the ultrasonic transmitter and the MCU main control unit. The method is based on the system. The ultrasonic pen based writing system provided by the embodiments of the present disclosure can minimize the error caused by slant writing and reduce the structural complexity of the ultrasonic writing systems.

FIG. 1

# Description

## CROSS-REFERENCE

The present application claims priorities to Chinese Patent Application No. 2016103306376, filed on May 18, 2016, entitled "Writing System Based on Ultrasonic Lamb Waves" and Chinese Patent Application No. 2016103300257, filed on May 18, 2016, entitled "Writing Method for Ultrasonic Pen", the disclosures of which are incorporated herein by reference in their entireties.

## FIELD OF TECHNOLOGY

The present disclosure relates to the technical field of ultrasonic sensing, and particularly to an ultrasonic pen based writing system and method.

## BACKGROUND

With the advent of the information age, touch technology as a convenient interaction with the electronic platform has been applied deeply into daily lives. Many daily affairs and business affairs are handled electronically through self-services. Usually, people need to sign digital signatures with original handwriting, therefore there is a need to provide a digital writing device.

In the prior art, Chinese patent No. 201210041949.7 disclosed on September 11, 2013 relates to an ultrasonic handwriting input system, the technical solution thereof is that the ultrasonic handwriting input system at least comprises a handwriting input working plane, an ultrasonic handwriting pen moving on the working plane, at least two ultrasonic receiving sensors spaced with each other for receiving the ultrasonic waves emitted from the ultrasonic handwriting pen; wherein the ultrasonic handwriting pen comprises a shell with an ultrasonic wave outlet provided in a pen tip portion, and an ultrasonic emitting sensor provided inside the shell for emitting ultrasonic waves to the working plane from the ultrasonic wave outlet; wherein the valid ultrasonic waves received by the ultrasonic receiving sensors for calculating the propagating time of the ultrasonic waves by the system are those reflected by the working plane. In the practical applications, the technical solution thereof mainly emits sound waves from the opening of the pen tip and reduces the distance between the outlet of the ultrasonic pen and the pen tip that is writing, so as to reduce the error caused by slant writing. However, since there is still a certain distance from the pen tip opening to the pen tip, this solution cannot completely avoid the error caused by the slant pen tip. Additionally, since the ultrasonic waves emitted from the pen tip opening arrives at the receivers by the reflection of the working plane, and the ultrasonic receivers are microphones which must be placed on the working plane, this solution brings inconvenience to the product integration of the writing system.

Further, Chinese patent No. 201520590075.X disclosed on April 6, 2016 relates to a handwriting input device with ultrasonic pen, the technical solution thereof is that the handwriting input device comprises a substrate, a main controller unit, an ultrasonic pen and at least two ultrasonic receivers; wherein the ultrasonic receiver is connected to the main controller unit, the substrate is provided with a hole, and the ultrasonic receiver is fixedly disposed on the substrate; ultrasonic signals emitted by the ultrasonic pen are transmitted to the ultrasonic receivers through the front of the substrate and the hole during handwriting. However in this solution, the pressure value of the ultrasonic pen is obtained by a pressure sensing unit that is disposed separately, and thus the complexity of the structure and the manufacturing cost are increased.

Therefore, how to provide an ultrasonic pen based writing system that is capable of minimizing the error caused by slant writing and reducing the structural complexity, is of great importance.

## SUMMARY

In view of the prior art, the present disclosure provides an ultrasonic pen based writing system and method.

In one aspect, the embodiments of the present disclosure provide an ultrasonic pen based writing system, including:

an ultrasonic pen, a writing board, an MCU main control unit and a reference signal transmitting unit;

wherein the ultrasonic pen comprises an ultrasonic transmitter and a pen lead; an upper end portion of the pen lead forms a signal receiving portion fixed with the ultrasonic transmitter;

at least two ultrasonic receivers are arranged correspondingly on the writing board, each ultrasonic receiver is communicatively connected to the MCU main control unit;

the reference signal transmitting unit is communicatively connected to the ultrasonic transmitter and the MCU main control unit;

an lower end portion of the pen lead is in contact with the writing board when writing; when the ultrasonic transmitter transmitting ultrasonic waves, the reference signal transmitting unit transmits a reference signal to the MCU main control unit, the ultrasonic waves transmitted by the ultrasonic transmitter arrive at each ultrasonic receiver by sequentially passing through the pen lead and the writing board; and the MCU main control unit determines writing traces according to the received reference signal and ultrasonic wave information received by each ultrasonic receiver.

The ultrasonic pen based writing system provided by the embodiments of the present disclosure reduces the structural complexity since it only consists of the ultrasonic pen, the writing board, the MCU main control unit and the reference signal transmitting unit, and the connection between each member is simple. In addition, since the ultrasonic waves propagate only when the pen lead is in direct contact with the writing board (the ultrasonic waves propagate from the contact site directly) during writing, the error caused by slant writing is minimized so that the writing is more accurate. Further, compared to the prior art, the ultrasonic waves in the present disclosure are transmitted through solid medium, and since the solid medium is more stable than air, the anti-interference of the sound waves propagating in the solid medium is stronger than that of the sound waves propagating in the air. Therefore, better writing stability is provided.

In another aspect, the embodiments of the present disclosure further provide an ultrasonic pen based writing method, including:

the ultrasonic transmitter emitting ultrasonic waves and the reference signal transmitting unit emitting the reference signal to the MCU main control unit;

wherein the ultrasonic waves enter the writing board through the pen lead in direct contact with the writing board, and propagate within the writing board to form the Lamb waves;

each ultrasonic receiver converting the Lamb waves into an electrical signal and sending the electrical signal to the MCU main control unit after receiving the Lamb waves;

the MCU main control unit determining the writing traces according to the electrical signal sent by each ultrasonic receiver and the reference signal emitted by the reference signal transmitting unit.

Since the ultrasonic waves propagate only when the pen lead is in direct contact with the writing board (the ultrasonic waves propagate from the contact site directly) during writing, the ultrasonic pen based writing method provided by the embodiments of the present disclosure minimizes the error caused by slant writing so that the writing is more accurate. Further, compared to the prior art, the ultrasonic waves in the present disclosure are transmitted through solid medium, and since the solid medium is more stable than air, the anti-interference of the sound waves propagating in the solid medium is stronger than that of the sound waves propagating in the air. Therefore, better writing stability is provided.

## BRIEF DESCRIPTION OF THE DRAWINGS

FIG. 1 is a structural diagram of the ultrasonic receivers arranged on the back of the writing board according to an embodiment of the present disclosure.

FIG. 2 is a structural diagram of the front view of the ultrasonic pen according to an embodiment of the present disclosure.

FIG. 3 is a cross-sectional view taken along line A-A of FIG. 2.

FIG. 4 is a structural diagram of the ultrasonic receivers arranged on the sides of the writing board according to an embodiment of the present disclosure.

FIG. 5 is a structural diagram of the ultrasonic receivers arranged on the front of the writing board according to an embodiment of the present disclosure.

FIG. 6 is a structural diagram of the ultrasonic receivers arranged on the slopes of the writing board according to an embodiment of the present disclosure.

The reference numerals in the figures are: 1. writing board; 2. ultrasonic pen; 3. ultrasonic receiver; 4. ultrasonic transmitter; 5. MCU main control unit; 6. pen lead; 7. shielding layer; 8. signal receiving portion; 9. pillar; 10. ultrasonic air passage.

## DETAILED DESCRIPTION

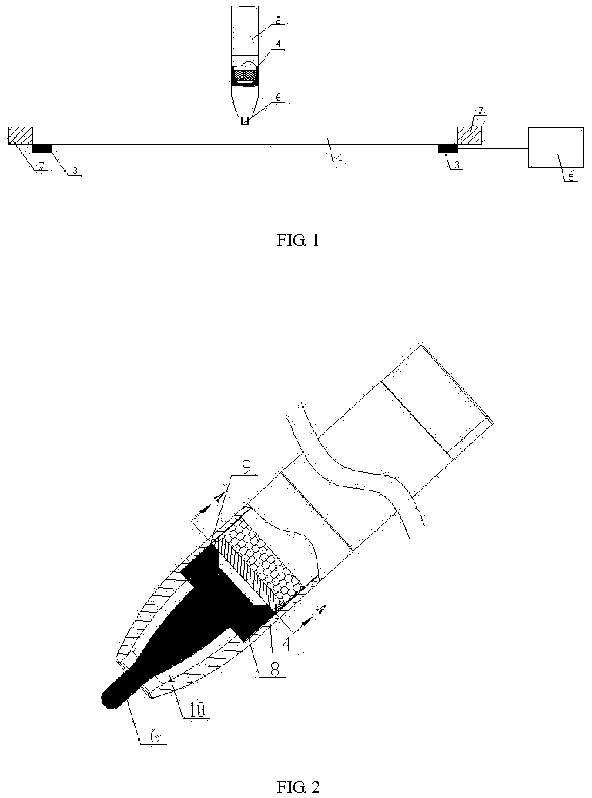

FIG.1 is a structural diagram of the ultrasonic receiver arranged on the back of the writing board according to an embodiment of the present disclosure. As shown in FIG.1, the embodiments of the present disclosure provide an ultrasonic pen based writing system, including an ultrasonic pen 2, a writing board 1, an MCU main control unit 5 and a reference signal transmitting unit (not shown).

The ultrasonic pen 2 includes an ultrasonic transmitter 4 and a pen lead 6; an upper end portion of the pen lead 6 forms a signal receiving portion 8 fixed with the ultrasonic transmitter 4.

At least two ultrasonic receivers 3 are arranged correspondingly on the writing board 1; each ultrasonic receiver 3 is communicatively connected to the MCU main control unit 5.

The reference signal transmitting unit is communicatively connected to the ultrasonic transmitter 4 and the MCU main control unit 5.

An lower end portion of the pen lead 6 is in contact with the writing board 1 when writing; when the ultrasonic transmitter 4 transmitting ultrasonic waves, the reference signal transmitting unit transmits a reference signal to the MCU main control unit 5, the ultrasonic waves transmitted by the ultrasonic transmitter 4 arrive at each ultrasonic receiver 3 by sequentially passing through the pen lead 6 and the writing board 1, and the MCU main control unit 5 determines writing traces according to the received reference signal and ultrasonic wave information received by each ultrasonic receiver 3.

The ultrasonic pen based writing system provided by the embodiments of the present disclosure reduces the structural complexity since it only consists of the ultrasonic pen 2, the writing board 1, the MCU main control unit 5 and the reference signal transmitting unit, and the connection between each member is simple. In addition, since the ultrasonic waves propagate only when the pen lead 6 is in direct contact with the writing board 1 (the ultrasonic waves propagate from the contact site directly) during writing, the error caused by slant writing is minimized so that the writing is more accurate. Further, compared to the prior art, the ultrasonic waves in the present disclosure are transmitted through solid medium, and since the solid medium is more stable than air, the anti-interference of the sound waves propagating in the solid medium is stronger than that of the sound waves propagating in the air, and thus better writing stability is provided.

It should be noted that the reference signal transmitting unit is a well-known prior art that is widely used. In the present embodiment, in the case of ensuring the reference signal transmitting unit being communicatively connected with the ultrasonic transmitter 4 and the MCU main control unit 5, the specific position of the reference signal transmitting unit may be adjusted according to actual needs, which is not limited by the present embodiment.

For example, the reference signal transmitting unit may be provided in the ultrasonic pen 2. It can be understood that when the ultrasonic pen 2 is designed to be a wireless structure, the reference signal transmitting unit can be an infrared transmitting unit; and when the ultrasonic pen 2 is designed to be a wired structure, the reference signal transmitting unit can be an electrical signal transmitting unit.

Specifically, the pen lead 6 may be a plate structure or a cylindrical structure. For example, the pen lead 6 may be an isosceles triangle structure in which the tip end portion of the pen lead 6 serves as the pen tip and the signal receiving portion 8 is a plane of the middle-rear portion of the pen lead 6; and the ultrasonic transmitter 4 is directly fixed to the plane. The pen lead may also be a cylindrical structure in which the signal receiving portion 8 is a plane constructed on the pen lead 6; and ultrasonic transmitter 4 is directly fixed to the plane. The plane for receiving signal may be disposed at the middle portion, rear portion or middle-rear portion of the pen lead 6, and may be perpendicular/parallel to the axis of the pen lead 6, or may be obliquely disposed on the pen lead 6.

The ultrasonic transmitter 4 and the ultrasonic receiver 3 may be ultrasonic transducers such as piezoelectric ceramic transducers, quartz wafer transducers and the like. The ultrasonic receiver 3 may be provided in a flat structure so as to be fixed to the writing board 1.

The writing board 1 is preferably made of transparent material such as plexiglass so as to be mounted on a display, thereby providing a better handwriting input experience.

The shape of the writing board 1 may preferably be rectangular so as to cooperate with the display. It can be understood that the shape of the writing board 1 can be adjusted according to actual needs. For example, it can be adjusted to a circle, a square, an ellipse, etc., which is not limited in the embodiments of the present disclosure.

The lower end portion (pen tip) of the pen lead 6 may also be disposed according to actual needs. For example, the lower end portion of the pen lead may be disposed in hemispherical structure, arc structure, conical structure, wedged structure, or the like.

In an embodiment of the present disclosure, the pen lead 6 is an integrated combination of a cylinder and a truncated cone, as shown in FIG. 2.

The lower end portion of the pen lead 6 is a cylinder integrated with a smaller end of the truncated cone.

The upper end portion of the pen lead 6 is another cylinder integrated with a larger end of the truncated cone so as to form the signal receiving portion 8. The radius of the signal receiving portion 8 is larger than the radius of the larger end of the truncated cone.

A plurality of pillars 9 are disposed on an end surface for fixing the ultrasonic transmitter 4 of the signal receiving portion 8. The ultrasonic transmitter 4 is fixed to the signal receiving portion 8 by the plurality of pillars 9 so that gaps are formed between the ultrasonic transmitter 4 and the signal receiving portion 8.

Correspondingly, there are also spaces between the pen lead 6 and the pen shell, which communicate with the gaps formed between the ultrasonic transmitter 4 and the signal receiving portion 8 so as to form ultrasonic air passages 10.

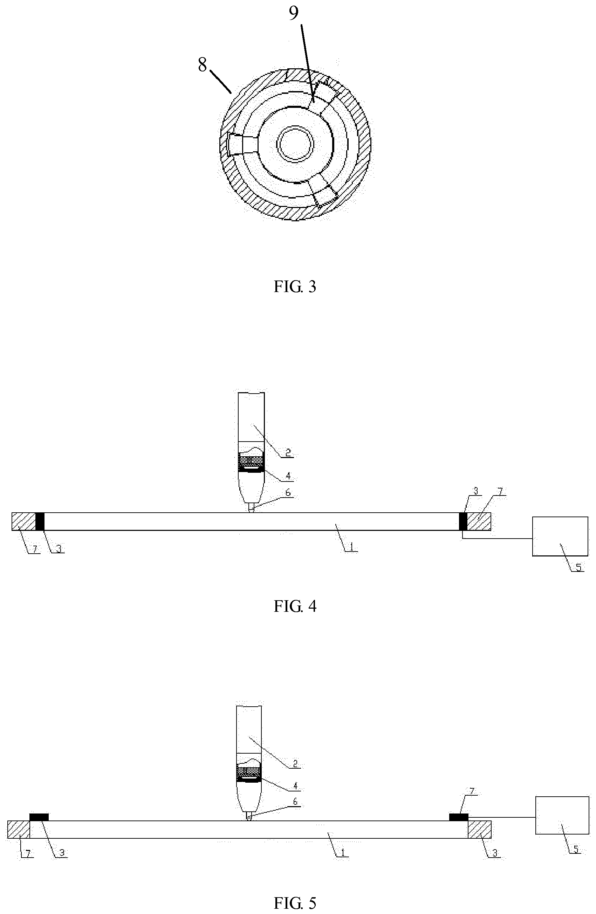

As shown in FIG. 3, it should be noted that, in such a configuration, the signal receiving portion 8 is a cylinder having a plurality of annular gaps for communicating the ultrasonic air passages 10 with the gaps between the ultrasonic transmitter 4 and the signal receiving portion 8, instead of a solid cylinder.

As such, the ultrasonic waves emitted by the ultrasonic transmitter 4 can propagate in two parts: one part of the ultrasonic waves propagate through the solid medium (including the signal receiving portion 8, the pen lead 6 and the writing board 1) for determining the writing traces; the other part of the ultrasonic waves propagate through the air (the gaps and the ultrasonic air passages 10).

At this time, as long as the hole is opened on the writing board 1, the ultrasonic waves propagated through the air can reach the ultrasonic receiver 3, and the ultrasonic waves propagated through the air can form a cursor guidance point on the writing board 1 so as to guide the user to write when the writing is not performed. The specific implementations of this function can refer to Chinese patent CN201520590075.X.

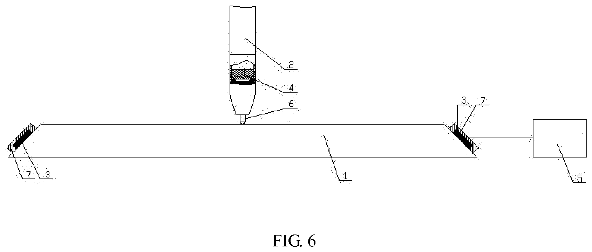

Further, as shown in FIGs. 1 and 4-6, in the ultrasonic pen based writing system provided by the embodiments of the present disclosure, each ultrasonic receiver 3 may be correspondingly disposed on the front edges, back edges, sides and the like of the writing board 1; and when the sides of the writing board 1 are slopes, each ultrasonic receiver 3 may also be correspondingly disposed on the slopes.

The sides of the writing board 1 is further provided with shielding layers 7 that can be disposed on the sides of the writing board 1 by coating or wrapping. The shielding layer 7 can effectively absorb the Lamb waves, which are formed by the ultrasonic waves propagating in the writing board 1, that have arrived at the respective edge regions of the writing board 1, so as to reduce the reflection of the Lamb waves and prevent the reflected Lamb waves from affecting the original waveforms.

The working principle of the ultrasonic pen based writing system provided by the embodiments of the present disclosure is as follows:

the ultrasonic transmitter 4 emits ultrasonic waves and the reference signal transmitting unit emits the reference signal to the MCU main control unit 5;

the ultrasonic waves enter into the pen lead 6 through the signal receiving portion 8; and when the lower end portion of the pen lead 6 is writing on the writing board 1, the lower end portion of the pen lead 6 is in direct contact with the writing board 1, so that the ultrasonic waves propagate to the interior of the writing board 1 and form the Lamb waves;

the Lamb waves propagate in various directions within the writing board and on the front and back of the writing board 1, and at least two ultrasonic receivers 3 fixed on the writing board 1 receive the Lamb waves and convert the Lamb waves into an electrical signal;

the MCU main control unit 5 determines respectively the distances of the ultrasonic waves from the lower end portion of the pen lead 6 to each ultrasonic receiver 3 according to the electrical signal and the reference signal, thereby determining the writing traces;

wherein the signal intensity of the Lamb wave varies with the writing strength within a certain range, and the waveform thereof also has a corresponding linear change. Therefore, the MCU main control unit 5 restores the obtained electrical signal to the corresponding Lamb waves and then determines the writing strength according to the amplitude change of the waveform.

To be specific, the case where the system has two ultrasonic receivers 3 is taken as an example as follows to describe the propagating distance of the ultrasonic waves from the pen tip to the ultrasonic receivers: Assuming that the length of the pen lead 6 is $L_0$**Fejl! Henvisningskilde ikke fundet.,** the speed of the ultrasonic waves within the pen lead 6 is $S_0$, the distance from the lower end portion (pen tip) of the pen lead 6 to the first ultrasonic receiver is $L_1$, the distance from the pen tip of the pen lead 6 to the second ultrasonic receiver is $L_2$, the speed of the ultrasonic waves within the writing board 1 is $S_1$, the distance between the two ultrasonic receivers is $L_3$, the propagating time of the ultrasonic wave within the pen lead 6 is $T_0$, the propagating time of the ultrasonic wave from the pen tip to the first ultrasonic receiver is $T_1$, the propagating time of the ultrasonic wave from the pen tip to the second ultrasonic receiver 3 is $T_2$, the time obtained at the first ultrasonic receiver by the MCU main control unit 5 according to the reference signal is $T_1'$, the time obtained at the second ultrasonic receiver by the MCU main control unit 5 according to the reference signal is $T_2'$, wherein $L_0$, $L_3$, $T_1'$, $T_2'$, $S_1$, $S_0$ are known already, wherein:

$$T_1' = T_0 + T_1$$

$$T_2' = T_0 + T_2$$

$$L_0 = T_0 * S_0$$

the value of $T_1$, $T_2$ can be obtained from the above three formulas, thereby:

$$L_1 = T_1 * S_1$$

$$L_2 = T_2 * S_1$$

the coordinate equation set of x and y is obtained according to the triangulation principle:

$$L_1{}^2 = x^2 + y^2$$

$$L_2{}^2 = (L_3 - x)^2 + y^2$$

the unique coordinate value of x is obtained from the above two formulas:

$$x = ( L_1{}^2 - L_2{}^2 + L_3{}^2 ) / (2^* L_3)$$

and thus the coordinate value of y is obtained while taking the positive value.

The ultrasonic pen based writing system provided by the embodiments of the present disclosure has a simple structure and extremely high precision, and the components such as the pen lead and the writing board can be arranged according to needs. Therefore, it can meet the requirements of the products with different specifications and has very broad application prospects.

In another aspect, the embodiments of the present disclosure further provide an ultrasonic pen based writing method, which is based on the ultrasonic pen based writing system of the embodiments above, including:

S1, the ultrasonic transmitter emitting ultrasonic waves and the reference signal transmitting unit emitting the reference signal to the MCU main control unit;
wherein the ultrasonic waves enter the writing board through the pen lead in direct contact with the writing board, and propagate within the writing board to form the Lamb waves;

S2, each ultrasonic receiver converting the Lamb waves into an electrical signal and sending the electrical signal to the MCU main control unit after receiving the Lamb waves;

S3, the MCU main control unit determining the writing traces according to the electrical signal sent by each ultrasonic receiver and the reference signal emitted by the reference signal transmitting unit.

Since the ultrasonic waves propagate only when the pen lead is in direct contact with the writing board (the ultrasonic waves propagate from the contact site directly) during writing, the ultrasonic pen based writing method provided by the embodiments of the present disclosure minimizes the error caused by slant writing so that the writing is more accurate. Further, compared to the prior art, the ultrasonic waves in the present disclosure are transmitted through solid medium, and since the solid medium is more stable than air, the anti-interference of the sound waves propagating in the solid medium is stronger than that of the sound waves propagating in the air, and thus better writing stability is provided.

Further, the method further includes:

the MCU main control unit restoring the waveforms of the corresponding Lamb waves according to the received electrical signal sent by each ultrasonic receiver;

the MCU main control unit determining the writing strength according to the amplitude change of the restored waveforms of the Lamb waves.

It is to be understood that the examples of each embodiment above are merely for the purpose of facilitating a better understanding of the structure provided by the embodiments of the present disclosure and are not intended to specifically limit the invention. The various alternative embodiments described above do not affect each other, and the technical solutions obtained from any combination of the various alternative embodiments should be within the scope of the present invention.

In the description provided herein, numerous specific details are set forth. However, it is to be understood that the embodiments of the present disclosure may be practiced without these specific details. In some instances, well-known methods, structures and techniques are not shown in detail so as not to obscure the understanding of the description.

**Claims**

1. An ultrasonic pen based writing system, comprising an ultrasonic pen, a writing board, an MCU main control unit and a reference signal transmitting unit;

wherein the ultrasonic pen comprises an ultrasonic transmitter and a pen lead; an upper end portion of the pen lead forms a signal receiving portion fixed with the ultrasonic transmitter;
at least two ultrasonic receivers are arranged correspondingly on the writing board, each ultrasonic receiver is communicatively connected to the MCU main control unit;
the reference signal transmitting unit is communicatively connected to the ultrasonic transmitter and the MCU main control unit;
an lower end portion of the pen lead is in contact with the writing board when writing; when the ultrasonic transmitter transmitting ultrasonic waves, the reference signal transmitting unit transmits a reference signal to the MCU main control unit, the ultrasonic waves transmitted by the ultrasonic transmitter arrive at each ultrasonic receiver by sequentially passing through the pen lead and the writing board; and the MCU main control unit determines writing traces according to the received reference signal and ultrasonic wave information received by each ultrasonic receiver.

**2.** The system of claim 1, wherein the pen lead is an integrated combination of a cylinder and a truncated cone;

wherein the lower end portion of the pen lead is a cylinder integrated with a smaller end of the truncated cone;
the upper end portion of the pen lead is another cylinder integrated with a larger end of the truncated cone so as to form the signal receiving portion; a radius of the signal receiving portion is larger than a radius of the larger end of the truncated cone.
a plurality of pillars are disposed on an end surface for fixing the ultrasonic transmitter of the signal receiving portion, the ultrasonic transmitter is fixed to the signal receiving portion by the plurality of pillars so that gaps are formed between the ultrasonic transmitter and the signal receiving portion.

**3.** The system of claim 2, wherein spaces are formed between the pen lead and pen shell, and communicate with the gaps formed between the ultrasonic transmitter and the signal receiving portion so as to form ultrasonic air passages.

**4.** The system of claim 1, wherein the ultrasonic transmitter and the ultrasonic receiver are ultrasonic transducers.

**5.** The system of claim 1, wherein the writing board is made of transparent materials.

**6.** The system of claim 1, wherein the lower end portion of the pen lead is in one of a hemispherical structure, an arc structure, a conical structure and a wedged structure.

**7.** The system of any of claims 1-6, wherein each ultrasonic receiver is correspondingly disposed on front edges, back edges, or sides of the writing board, or,
when the sides of the writing board are slopes, each ultrasonic receiver is correspondingly disposed on the slopes.

**8.** The system of claim 7, wherein the sides of the writing board are coated or wrapped with shielding layers.

**9.** An ultrasonic pen based writing method, which is based on the system of any of claims 1-8, comprises:

the ultrasonic transmitter emitting ultrasonic waves and the reference signal transmitting unit emitting the reference signal to the MCU main control unit;

wherein the ultrasonic waves enter into the writing board through the pen lead in direct contact with the writing board, and propagate within the writing board to form the Lamb waves;
each ultrasonic receiver converting the Lamb waves into an electrical signal and sending the electrical signal to the MCU main control unit after receiving the Lamb waves;
the MCU main control unit determining the writing traces according to the electrical signal sent by each ultrasonic receiver and the reference signal emitted by the reference signal transmitting unit.

**10.** The method of claim 9, further comprises:

the MCU main control unit restoring the waveforms of the corresponding Lamb waves according to the received electrical signal sent by each ultrasonic receiver;
the MCU main control unit determining the writing strength according to the amplitude change of the restored waveforms of the Lamb waves.

FIG. 1

FIG. 2

FIG. 3

FIG. 4

FIG. 5

FIG. 6

# INTERNATIONAL SEARCH REPORT

| International application No. |
| --- |
| **PCT/CN2017/075962** |

**A. CLASSIFICATION OF SUBJECT MATTER**

G06F 3/043 (2006.01) i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT; CNKI; WPI; EPODOC: ultrasonic wave, nib, lamb wave, ultrasonic, pen, writ+, receiv+, emit+, lamb, pen core, propagat+, solid, air, medium

**C. DOCUMENTS CONSIDERED TO BE RELEVANT**

| Category* | Citation of document, with indication, where appropriate, of the relevant passages | Relevant to claim No. |
| --- | --- | --- |
| PX | CN 105867704 A (CHENGDU KYRGYZSTAN SHARP TOUCH ERA TECHNOLOGY CO., LTD.), 17 August 2016 (17.08.2016), description, paragraphs [0038]-[0065], and figures 1-6 | 1-10 |
| PX | CN 106020573 A (CHENGDU KYRGYZSTAN SHARP TOUCH ERA TECHNOLOGY CO., LTD.), 12 October 2016 (12.10.2016), description, paragraphs [0029]-[0040], and figures 1-6 | 1-10 |
| PX | CN 205880845 U (CHENGDU KYRGYZSTAN SHARP TOUCH ERA TECHNOLOGY CO., LTD.), 11 January 2017 (11.01.2017), description, paragraphs [0038]-[0065], and figures 1-6 | 1-10 |
| X | CN 102375624 A (LIU, Zhonghua), 14 March 2012 (14.03.2012), description, paragraphs [0028]-[0058] and [0062], and figures 1-2 | 1-10 |
| A | CN 103294285 A (MEASUREMENT SPECIALTIES (CHINA) LTD.), 11 September 2013 (11.09.2013), the whole document | 1-10 |
| A | CN 205139850 U (CHENGDU KYRGYZSTAN SHARP TOUCH ERA TECHNOLOGY CO., LTD.), 06 April 2016 (06.04.2016), the whole document | 1-10 |

☐ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 17 April 2017 (17.04.2017) | **27 April 2017 (27.04.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **JIAO, Yue** Telephone No.: (86-10) **01062414021** |

Form PCT/ISA/210 (second sheet) (July 2009)

## INTERNATIONAL SEARCH REPORT
### Information on patent family members

International application No.

**PCT/CN2017/075962**

| Patent Documents referred in the Report | Publication Date | Patent Family | Publication Date |
|---|---|---|---|
| CN 105867704 A | 17 August 2016 | None | |
| CN 106020573 A | 12 October 2016 | None | |
| CN 205880845 U | 11 January 2017 | None | |
| CN 102375624 A | 14 March 2012 | WO 2012024899 A1 | 01 March 2012 |
| CN 103294285 A | 11 September 2013 | None | |
| CN 205139850 U | 06 April 2016 | None | |

Form PCT/ISA/210 (patent family annex) (July 2009)

**EP 3 460 642 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2016103306376
- CN 2016103300257
- CN 201210041949
- CN 201520590075 X